# FASCICULE DE BREVET EUROPEEN

(11) **EP 1 332 061 B1**
(45) Date de publication et mention de la délivrance du brevet: **21.06.2006**
(21) Numéro de dépôt: 01992651.8
(22) Date de dépôt: 06.11.2001
(51) Int. Cl.: B60J 7/14

(54) **TOIT ESCAMOTABLE POUR VEHICULE A DEUX BRAS PIVOTANTS**
FALTDACH FÜR FAHRZEUGE MIT ZWEI SCHWENKARMEN
VEHICLE RETRACTABLE ROOF WITH TWO PIVOTING ARMS

(30) Priorité: 06.11.2000 FR 0014183
(43) Date de publication de la demande: 06.08.2003
(73) Titulaire: Société Européenne de Brevets Automobiles - SEBA, 75011 Paris (FR)
(72) Inventeur: QUEVEAU, Gérard, F-79140 Le Pin (FR); GUILLEZ, Jean-Marc, F-79140 Cirières (FR)
(74) Mandataire: Geismar, Thierry
(86) Numéro de dépôt international: PCT/FR2001/003432
(87) Numéro de publication internationale: WO 2002/036377

(56) Documents cités:
- EP-A- 0 835 779
- EP-A- 0 835 780

## Description

La présente invention concerne un toit escamotable ou rétractable dans le coffre arrière d'un véhicule.

Un tel toit escamotable permet notamment de transformer un véhicule du type coupé à deux places ou coupé ou berline à quatre places en un véhicule du type cabriolet.

Dans le cas des coupés ou berlines à quatre places, le toit présente une longueur relativement importante, de sorte que le toit escamotable est composé de trois éléments dont chacun a une longueur compatible avec les dimensions du coffre du véhicule.

On connaît ainsi un toit escamotable pour véhicule, comprenant un élément de toit avant, un élément de toit intermédiaire et un élément de toit arrière, ces trois éléments étant mobiles entre une position dans laquelle, ils recouvrent l'habitacle du véhicule et une position dans laquelle, ils sont superposés sensiblement horizontalement dans le coffre arrière du véhicule.

Un tel toit escamotable est, par exemple, connu du document EP-A-0 835 779.

Le but de la présente invention est d'apporter des perfectionnements aux moyens connus, pour commander et guider d'une manière optimale le déplacement des éléments du toit entre leur position de fermeture et leur position de rangement dans le coffre.

Suivant l'invention, le toit escamotable est caractérisé en ce que le déplacement de l'élément arrière vers le coffre est commandé par au moins un bras articulé au châssis du véhicule et à l'élément arrière, en ce que l'élément arrière est relié à l'élément intermédiaire par un levier articulé près du bord avant de l'élément arrière et articulé à l'élément intermédiaire, ce dernier étant relié au châssis par un second bras articulé au châssis et à l'élément intermédiaire, en ce que l'avant de l'élément intermédiaire est relié à l'élément avant par deux leviers articulés formant un quadrilatère déformable, ledit second bras articule au châssis et à l'élément intermédiaire étant relié à l'un des deux leviers articulés formant un quadrilatère déformable par une biellette articulée audit second bras et audit un desdits deux leviers, et en ce que des moyens de liaison sont prévus entre le premier bras et le second bras ou entre le premier bras et le levier reliant l'élément arrière à l'élément intermédiaire ou entre ce dernier levier et un point d'articulation fixe du châssis.

D'autres particularités et avantages de l'invention apparaîtront encore dans la description ci-après.

Aux dessins annexés, donnés à titre d'exemples non limitatifs :
- La figure 1 est une vue schématique en coupe longitudinale partielle d'un véhicule équipé d'un toit escamotable selon l'invention, en position fermée ;
- La figure 2 est une vue analogue à la figure 1, le toit escamotable étant dans une position intermédiaire ;
- La figure 3 est une vue analogue aux figures 1 et 2, le toit escamotable étant en position rangée dans le coffre du véhicule.

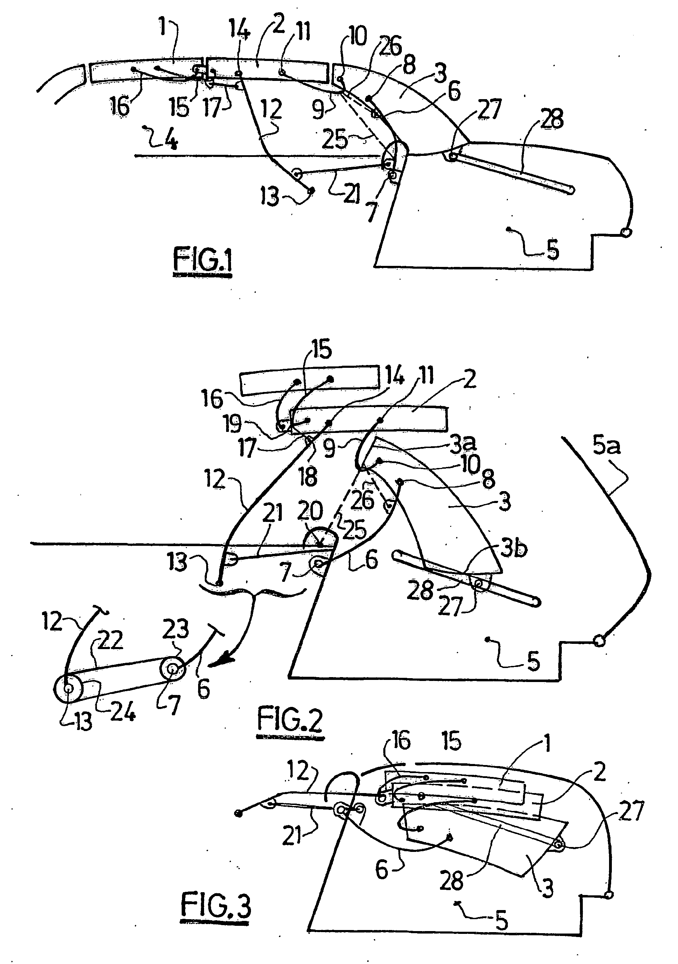

Dans la réalisation représentée sur les figures 1 à 3, le toit escamotable comprend un élément de toit avant 1, un élément de toit intermédiaire 2 et un élément de toit arrière 3. Ces trois éléments 1, 2, 3 sont mobiles entre une position dans laquelle (voir figure 1), ils recouvrent l'habitacle 4 du véhicule et une position (voir figure 3) dans laquelle, ils sont superposés sensiblement horizontalement dans le coffre arrière 5 du véhicule.

Conformément à l'invention, le déplacement de l'élément arrière 3 vers le coffre 5 est commandé par un bras 6 articulé en 7 au châssis du véhicule et en 8 à l'élément arrière 3.

L'élément arrière 3 est relié à l'élément intermédiaire 2 par un levier 9 articulé en 10 près du bord avant 3a de l'élément arrière 3 et articulé en 11 à l'élément intermédiaire 2. Ce dernier est relié au châssis par un second bras 12 articulé en 13 au châssis, et en 14 à l'élément intermédiaire 2.

L'avant de l'élément intermédiaire 2 est relié à l'élément avant 1 par deux leviers articulés 15, 16 formant un quadrilatère déformable.

Le second bras 12 articulé au châssis est relié à l'un 15 des deux leviers formant un quadrilatère déformable par une biellette 17 articulée en 18 au second bras 12 et en 19 au levier 15.

Par ailleurs, des moyens de liaison sont prévus entre le premier bras 6 et le second bras 12 ou entre le premier bras 6 et le levier 9 reliant l'élément arrière 3 à l'élément intermédiaire 2 ou entre le levier 9 et un point d'articulation fixe 20 du châssis

Selon une première version, les moyens de liaison précités comprennent une biellette 21 articulée au premier bras 6 et au second bras 12. Cette biellette 21 peut être remplacée (voir figure 2) par une chaîne 22 ou une courroie crantée enroulée autour de deux pignons 23, 24 montés sur les axes de pivotement 7 et 13 des bras 6 et 12 et solidaires de ceux-ci.

Dans une deuxième version, un levier 25 est articulé au levier 9 reliant l'élément arrière 3 et l'élément intermédiaire 2 et à un point fixe 20 du châssis.

Dans une troisième version, les moyens de liaison comprennent une biellette 26 articulée au premier bras 6 et au levier 9 reliant les éléments arrière 3 et intermédiaire 2.

Dans l'exemple représenté sur les figures 1 à 3, le déplacement de l'élément arrière 3 vers le coffre 5 est en outre commandé par un doigt 27 porté par la partie arrière 3b de l'élément arrière 3 engagé de façon coulissante dans une glissière 28 s'étendant à l'intérieur du coffre 5.

Au lieu du doigt 27 et de la glissière 28, le déplacement de l'élément arrière 3 vers le coffre 5 peut être commandé par un second bras (non représenté) articulé au châssis et à la partie arrière 3b de l'élément arrière 3.

Le toit rétractable que l'on vient de décrire fonctionne de la manière suivante :

Après déverrouillage des éléments 1, 2, 3, et ouverture du couvercle 5a du coffre 5, le pivotement du bras 6 commandé par un moteur ou un vérin, entraîne l'élément arrière 3 vers le coffre 5, le déplacement de cet élément 3 étant guidé par le coulissement du doigt 27 le long de la glissière 28.

Le déplacement de l'élément 3 fait pivoter les leviers 9, 12 vers le haut et vers l'arrière, grâce aux moyens de liaison 21, ou 22, ou 25, ou 26.

Le mouvement des leviers 9, 12 soulève l'élément 2 et fait passer celui-ci au-dessus de l'élément arrière 3, comme montré par la figure 2.

Le pivotement du bras 12 commande grâce à la biellette 17 reliant ce bras 12 au levier 15, le pivotement des leviers 15, 16 et le soulèvement de l'élément avant 1 qui passe ainsi au-dessus de l'élément intermédiaire 2, comme également montré par la figure 2.

Le mouvement des éléments 1, 2, 3 se poursuit jusqu'à ce qu'ils soient rangés sensiblement horizontalement dans le coffre 5, comme montré par la figure 3.

## Revendications

1. Toit escamotable pour véhicule, comprenant un élément de toit avant (1), un élément de toit intermédiaire (2) et un élément de toit arrière (3), ces trois éléments étant mobiles entre une position dans laquelle, ils recouvrent l'habitacle (4) du véhicule et une position dans laquelle, ils sont superposés sensiblement horizontalement dans le coffre arrière (5) du véhicule, **caractérisé en ce que** le déplacement de l'élément arrière (3) vers le coffre (5) est commandé par au moins un bras (6) articulé au châssis du véhicule et à l'élément arrière (3), **en ce que** l'élément arrière (3) est relié à l'élément intermédiaire (2) par un levier (9) articulé près du bord avant (3a) de l'élément arrière (3) et articulé à l'élément intermédiaire (2), ce dernier étant relié au châssis par un second bras (12) articulé au châssis et à l'élément intermédiaire (2), **en ce que** l'avant de l'élément intermédiaire (2) est relié à l'élément avant (1) par deux leviers (15, 16) articulés formant t un quadrilatère déformable, ledit second bras (12) articulé au châssis et à l'élément intermédiaire (2) étant relié à l'un (15) des deux leviers articulés formant un quadrilatère déformable par une biellette (17) articulée audit second bras (12) et audit un (15) desdits deux leviers, et **en ce que** des moyens de liaison sont prévus entre le premier bras (6) et le second bras (12) ou entre le premier bras (6) et le levier (9) reliant l'élément arrière (3) à l'élément intermédiaire (2) ou entre ce dernier levier (9) et un point d'articulation fixe (20) du châssis.

2. Toit escamotable conforme à la revendication 1, **caractérisé en ce que** lesdits moyens de liaison comprennent une biellette (21) articulée au premier bras (6) et au second bras (12).

3. Toit escamotable conforme à la revendication 1, **caractérisé en ce que** lesdits moyens de liaison comprennent un levier (25) articulé au levier (9) reliant l'élément arrière (3) et l'élément intermédiaire (2) et articulé à un point fixe (20) du châssis.

4. Toit escamotable conforme à la revendication 1 , **caractérisé en ce que** lesdits moyens de liaison comprennent une biellette (26) articulée au premier bras (6) et au levier (9) reliant les éléments arrière (3) et intermédiaire (2).

5. Toit escamotable conforme à la revendication 1 , **caractérisé en ce que** lesdits moyens de liaison comprennent une chaîne (22) ou une courroie crantée enroulée autour de deux pignons (23, 24) montés sur les axes de pivotement des points d'articulation (7, 13) du premier bras (6) et du second bras (12) au châssis et solidaires de ceux-ci.

6. Toit escamotable conforme à la revendication 1, **caractérisé en ce que** le déplacement de l'élément arrière (3) vers le coffre (5) est en outre commandé par un doigt (27) porté par la partie arrière (3b) de l'élément arrière (3) engagé de façon coulissante dans une glissière (28) s'étendant à l'intérieur du coffre (5).

7. Toit escamotable conforme à la revendication 1, **caractérisé en ce que** le déplacement de l'élément arrière (3) vers le coffre (5) est en outre commandé par un bras articulé au châssis et à la partie arrière (3b) de l'élément arrière (3).

## Claims

1. Retractable roof for a vehicle, comprising a front roof element (1), a middle roof element (2) and a rear roof element (3), these three elements- being mobile between a position in which they cover the passenger compartment (4) of the vehicle and a position in which they are stacked substantially horizontally in the rear boot (5) of the vehicle, **characterised in that** the movement of the rear element (3) towards the boot (5) is controlled by means of at least one arm (6) connected to the chassis of the vehicle and to the rear element (3), **in that** the rear element (3) is connected to the middle element (2) by means of a lever (9) connected near the front edge (3a) of the rear element (3) and connected to the middle element (2), the latter being connected to the chassis by means of a second arm (12) connected to the chassis and to the middle element (2), **in that** the front of the middle element (2) is connected to the front element (1) by means of two connected levers (15, 16) that form a deformable quadrilateral, said second arm (12) connected to the chassis and to the middle element (2) being connected to one (15) of the two connected levers that form a deformable quadrilateral by means of a small connecting rod (17) connected to said second arm (12) and to said one of the two levers (15), and **in that** linking means are provided between the first arm (6) and the second arm (12) or between the first arm (6) and the lever (9) that connects the rear element (3) to the middle element (2) or between the latter lever (9) and a fixed connection point (20) of the chassis.

2. Retractable roof according to claim 1, **characterised in that** said linking means comprise a small connecting rod (21) connected to the first arm (6) and to the second arm (12).

3. Retractable roof according to claim 1, **characterised in that** said linking means comprise a lever (25) connected to the lever (9) that connects the rear element (3) and the middle element (2) and connected to a fixed point (20) of the chassis.

4. Retractable roof according to claim 1, **characterised in that** said linking means comprise a small connecting rod (26) connected to the first arm (6) and to the lever (9) that connects the rear (3) and middle (2) elements.

5. Retractable roof according to claim 1, **characterised in that** said linking means comprise a chain (22) or a notched belt wound around two pinions (23, 24) mounted on the pivoting axes of the connection points (7, 13) of the first arm (6) and of the second arm (12) to the chassis, and are solidly attached thereto.

6. Retractable roof according to claim 1, **characterised in that** the movement of the rear element (3) towards the boot (5) is also controlled by a finger (27) supported by the rear part (3b) of the rear element (3) inserted so as to slide inside a slide (28) that extends into the boot (5).

7. Retractable roof according to claim 1, **characterised in that** the movement of the rear element (3) towards the boot (5) is also controlled by an arm connected to the chassis and to the rear part (3b) of the rear element (3).

## Patentansprüche

1. Ausfahrbares Dach eines Fahrzeugs mit einem vorderen Dachelement (1), einem mittleren Dachelement (2) und einem hinteren Dachelement (3), wobei diese drei Elemente zwischen einer Position mobil sind, in der sie die Insassenkabine (4) des Fahrzeugs abdecken, und einer Position, in der sie deutlich horizontal im hinteren Kofferraum (5) des Fahrzeugs übereinander gelagert sind, **dadurch gekennzeichnet, dass** die Verschiebung des hinteren Elements (3) zum Kofferraum (5) durch wenigstens einen am Fahrgestell des Fahrzeugs und am hinteren Element (3) artikulierten Arm (6) gesteuert wird und dass das hintere Element (3) am mittleren Element (2) durch einen in der Nähe des vorderen Randes (3a) des hinteren Elements (3) artikulierten und am mittleren Element (2) artikulierten Hebel (9) verbunden ist, wobei letzterer durch einen am Fahrgestell und am mittleren Element (2) artikulierten zweiten Arm (12) mit dem Fahrgestell verbunden ist, dass das Vorderteil des mittleren Elements (2) mit dem vorderen Element (1) durch zwei ein verformbares Trapezoid bildende artikulierte Hebel (15, 16) verbunden ist, wobei der genannte am Fahrgestell und am mittleren Element (2) artikulierte zweite Arm (12) mit einem (15) der beiden artikulierten, ein durch eine am genannten zweiten Arm (12) und am genannten einen (15) der beiden Hebel artikulierte Pleuelstange (17) verformbares Trapezoid bildenden Hebel verbunden ist und dass Verbindungsmittel zwischen dem ersten Arm (6) und dem zweiten Arm (12) oder zwischen dem ersten Arm (6) und dem das hintere Element (3) mit dem mittleren Element (2) verbindenden Hebel (9) oder zwischen diesem letzteren Hebel (9) und einem festen Artikulationspunkt (20) des Fahrgestells vorgesehen sind.

2. Ausfahrbares Dach gemäß Anspruch 1, **dadurch gekennzeichnet, dass** die genannten Verbindungsmittel eine am ersten Arm (6) und am zweiten Arm (12) artikulierte Pleuelstange (21) umfassen.

3. Ausfahrbares Dach gemäß Anspruch 1, **dadurch gekennzeichnet, dass** die genannten Verbindungsmittel einen am das hintere Element (3) und das mittlere Element (2) verbindenden und an einem festen Punkt (20) des Fahrgestells artikulierten Hebel (9) artikulierten Hebel (25) umfassen.

4. Ausfahrbares Dach gemäß Anspruch 1, **dadurch gekennzeichnet, dass** die genannten Verbindungsmittel eine am ersten Arm (6) und am die hinteren (3) und mittleren (2) Elemente verbindenden Hebel (9) artikulierte Pleuelstange (26) umfassen.

5. Ausfahrbares Dach gemäß Anspruch 1, **dadurch gekennzeichnet, dass** die genannten Verbindungsmittel eine Kette (22) oder einen Zahnriemen umfassen, der / die um zwei auf den Schwenkachsen der Artikulationspunkte (7, 13) des ersten Arms (6) und des zweiten Arms (12) am Fahrgestell angebrachten Ritzel (23, 24) aufgerollt und mit diesen fest verbunden ist / sind.

6. Ausfahrbares Dach gemäß Anspruch 1, **dadurch gekennzeichnet, dass** die Verschiebung des hinteren Elements (3) zum Kofferraum (5) darüber hinaus durch einen vom hinteren Teil (3b) des gleitend in eine sich im Innern des Kofferraums (5) erstreckende Gleitschiene (28) eingreifenden hinteren Elements (3) getragenen Finger (27) gesteuert wird.

7. Ausfahrbares Dach gemäß Anspruch 1, **dadurch gekennzeichnet, dass** die Verschiebung des hinteren Elements (3) zum Kofferraum (5) darüber hinaus durch einen am Fahrgestell und am hinteren Teil (3b) des hinteren Elements (3) artikulierten Arm gesteuert wird.
